# EUROPEAN PATENT APPLICATION

(11) **EP 4 671 719 A1**
(43) Date of publication of application: **31.12.2025**
(21) Application number: 24184859.7
(22) Date of filing: 27.06.2024
(51) Int. Cl.: G01L 5/22, G01L 1/04, G01L 1/12

(54) **METHOD FOR MONITORING GRIP AND USER INTERACTIONS OF HAND-OPERATED DEVICE**

(71) Applicant: Dätwyler Schweiz AG, 6467 Schattdorf (CH)
(72) Inventor: Ahaggach, Yassine, 8047 Zurich (CH); Lamkharbech, Yassine, 6460 Altdorf (CH)
(74) Representative: Prins Intellectual Property AG

(57) **Abstract**

A method for monitoring grip strength of and user interactions with a hand-operated device with a hand grip, wherein the hand grip comprises: a first layer of elastomeric material with homogeneously dispersed magnetic particles, and an array of magnetic sensor elements arranged for measuring the magnetic properties in the elastomeric material at different locations of the hand grip; wherein the method comprises the steps of (a.) controlling the array of magnetic sensor elements to measure the magnetic properties of the first layer at different locations of the hand grip, (b.) calculating a distribution of gripping force over the different locations of the hand grip based on the measured magnetic properties.

## Description

### Technical Field

The invention relates to grip measurements for a hand-operated device and a hand-operated device, which monitors grip and user interaction.

### Technical Background

Hand-operated devices with handles comprising pressures sensors are known.

CN221006860 describes a device with two handles each comprising a pressure sensor. When the handles are held tightly and the pressure sensors detect a pressure greater than a set threshold value, the processor issues a command that the device may start operating. A groove is provided on both sides of the bottom of the handle in which a pressure sensor is fixedly mounted, and a non-slip sleeve is fixedly mounted near the outside of the pressure sensor.

DE102022127984 describes a handlebar means of a vehicle, having at least one grip portion against which a hand of the user bears while driving the vehicle. The grip portion is provided with a sensor, by means of which a gripping force can be detected. Detection of an excessive gripping force leads to the activation of a warning to the user.

However, these systems measure only an average gripping force on a handle. Furthermore, they are not suitable for placement on a handle with an ergonomic elastomer grip, because the ergonomic elastomer grip would considerably reduce the sensitivity of the sensor element.

EP4091518 describes a cleaning appliance having handle, which the user engages around in order to move the cleaning appliance over the surface to be cleaned. A tactile sensor device is arranged on the handle and designed to provide a sensor signal when the handle is driven. The sensor may be capacitive or resistive sensor. However, the method does only offer absolute pressure measurement.

EP3225963 describes a pressure and position measurement system for manually actuatable devices with a handle, wherein a grip zone of the handle is provided with at least one pressure sensor. The pressure sensor comprises a resistive sheet and a plurality of electrically insulated electrode pairs.

Although the system may be able to measure force distribution, is is not suitable for placement on a handle with an ergonomic elastomer grip, because the ergonomic elastomer grip would considerably reduce the sensitivity of the sensor element. Furthermore, capacitive or resistive sensors are complex to adjust to different situation or different spatial resolutions.

### Summary of the Invention

It is an objective of the invention to provide an improved method to accurately measure how a hand-operated device is being handled, to provide feedback necessary for optimizing user interaction and comfort, and/or to adapt operating conditions of the device according to the handling characteristics. It is a further objective, that the method can be easily customized to different hand-operated devices.

At least one of the objectives of the present invention is achieved by a method for monitoring grip strength and user interactions of hand-operated device with a hand grip according to claim 1 and a hand-operated device according to claim 8.

The method uses a hand grip comprising a first layer of elastomeric material with homogeneously dispersed magnetic particles, and an array of magnetic sensor elements arranged for measuring magnetic properties of the elastomeric material at different locations of the hand grip. The method comprises the steps of: (a.) controlling the array of magnetic sensor elements to measure the magnetic properties of the first layer at different locations of the hand grip, and (b.) calculating a distribution of gripping force over the different locations of the hand grip based on the measured magnetic properties.

The force distribution may deliver information e.g. about a location of highest or lowest pressure point, shape or size of the hand holding the hand grip, average pressure over a predefined area, etc..

The method can be implemented in any hand-operated device, such as hand tools and larger machines, which are held or operated with one or two hands. The first layer of elastomeric material may be an outer layer of the hand grip, which is compressed when a hand of the user grips the hand grip. The first layer may be even formed as a ergonomic elastomer hand grip. The distribution of gripping force and if required its change over time can be determined and used for optimizing user interaction and comfort, give feedback to the user and/or to adapt operating conditions of the device according to the handling characteristics.

Thus, the method adds a sensing functionality to an existing elastomeric grip and thereby reduces the number of components and complexity compared to a solution with capacitive or resistive sensor elements. Furthermore, the method offers a versatile customization of spatial pressure sensing through shape, formulation and magnetization of the elastomeric layer. Spatial resolution is easily adjusted via the number and placement of magnetic sensor elements, in particular Hall sensors. Capacitive or resistive sensor elements require complex redesign.

A measurement of the magnetic properties of the elastomeric component can be achieved in two ways.

Firstly, the dispersed magnetic particles may be permanently magnetized to create a remanent magnetic field in the elastomeric component and the sensor element may measure the remanent magnetic field of the elastomeric component.

The first layer of elastomeric material comprising dispersed magnetizable filler material may be magnetized with classic magnetization method using e.g. a coil that generates a strong magnetic field pulse. The orientation of the remanent magnetic field can be optimized to make sure that deformation of the elastomeric matrix yields the highest measurable change in the remanent magnetic field.

Thus, the permanently magnetized magnetic particles generate a remanent magnetic field located near the magnetic sensor elements of the array. This setup allows to measure the force applied as well as its distribution, because localized compression of the elastomeric first layer leads to localized changes in the remanent magnetic field. These changes may be measured and provide information about the user interaction in form of the gripping strength of the user holding the device and the dimensional distribution of the gripping, e.g. the size of the hand gripping the hand grip. Further measures can also be derived such as friction, vibration, or even temperature, as the temperature may directly influence the magnetic properties of the magnetized particles. In addition, a temperature sensor may be used as reference. E.g. a digital hall sensor, which may be part of the magnetic sensor element may have an embedded temperature sensor.

Secondly, the magnetic sensor element (i.e. a coil) may create a magnetic field and measure the interactions of the magnetic particles with the generated magnetic field (e.g. a change in magnetic flux or inductance). The magnetic field may be pulsed for continuous measurements. The measurements also allow to measure the force applied as well as its distribution, which can be used the same way as described above.

Further embodiments of the invention are set forth in the dependent claims.

In some embodiments the array of magnetic sensor elements may be arranged underneath or around the first layer of elastomeric material. The placement of the magnetic sensor elements may depend on geometric constraints of the handgrip, size of hand grip or first layer of elastomeric material. Ideally, the sensor elements are arranged directly underneath the first layer to maximize sensitivity and obtain good signals and a higher resolution.

In some embodiments an operating condition of the hand-operated device may be controlled based on the calculated force distribution. E.g. a device may turn off when the gripping force falls below a predetermined threshold, or it may only operate when held with both hands or with a predetermined gripping force.

In some embodiments based on the calculated force distribution a haptic, visual or acoustic feedback may be given to the user. The user may then change his mode of operation. The feedback may be coupled to a predetermined time interval and a subsequent change in operating condition of the hand-operated device if the required mode of operation is not reached by the user during the time interval.

In some embodiments the calculated force distribution may be compared to at least one predefined force distribution pattern.

In some embodiments the calculated force distribution may be monitored and stored over a predefined time.

Examples for using the method:
1) The method may recognize the size of a hand, strength of the grip and/or absence of adequate grip. E.g., the hand-operated device may only start working when a predefined area of the hand grip experiences a predefined force. Thereby, it is possible to prevent children from using the device because the smaller hand and smaller gripping strength does not reach the predefined conditions. Or, a device would only start when two hand grips are held, e.g. a chain saw.
2) A hand-operated device may automatically turn off if not held correctly or when the gripping strength falls below a predefined threshold. This leads to enhanced safety and usability of powered hand-operated devices.
3) A hand-operated device may give a haptic, a visual or an acoustic feedback to the user about a specific condition related to the gripping force and give to user time to change his mode of operation.
4) A hand-operated device may be controlled by increasing gripping strength, e.g. the harder the grip the faster the rotation of a drill.
5) The hand grip may be used as "adaptive interface" in power tools or consumer electronics. Predefined areas may define "button" to control the device. The arrangement, size and the function of the buttons may be adapted to the user's needs. E.g. game controllers or other type of controllers may adapt their response based on the gripping strength of a hand and position of fingers pressing onto the surface.
5) The method may be used to monitor (short-term or long-term) the gripping strength and distribution and store the date for later analysis. This may be useful for sporting equipment such as golf club, tennis racket, hockey stick, etc. to analyse the gripping strength and distribution over time. Monitoring can provide insights into ergonomic usage, potentially guiding design improvements or user behaviour modifications.

The invention further relates to a hand-operated device with a hand grip making use of the above method. The hand grip comprises a first layer of elastomeric material with homogeneously dispersed magnetic particles, and an array of magnetic sensor elements arranged for measuring magnetic properties of the first layer at different locations of the hand grip. The hand-operated device comprises a processing unit configured to control the array of magnetic sensor elements to measure the magnetic properties of the first layer at different locations of the hand grip, and calculate a distribution of gripping force over the different locations of the hand grip based on the measured magnetic properties.

In some embodiments a second layer of elastomeric material without magnetic particles may be arranged between the array of magnetic sensor elements and the first layer of elastomeric material, wherein the second layer of elastomeric material without magnetic particles preferably has a different hardness than the first layer of elastomeric material. When a force is applied on the hand grip, the compression or deformation of the first layer changes e.g. the remanent magnetic field created by magnetized particles and thereby changes the magnetic flux density measured by the magnetic sensor element. In other words, the first layer acts as an elastically deformable permanent magnet whose magnetic field changes upon deformation. If the pressure is released, the elastically deformable permanent magnet and thereby the remanent magnetic field returns to its original state. The hand grip including the additional layer without magnetized particles allows to achieve sensing of force through two different mechanisms, i.e. by changing the distance between remanent magnetic field and magnetic sensor element (compression of additional layer) and changing the remanent magnetic field generated by the permanently magnetized particles (compression / deformation of outer layer). This allows to achieve a more complex "two stage" force to readout response that can be customized for different applications. Thus, the second layer arranged between the first layer body and the magnetic sensor elements, which has a different hardness than the first layer, allows to create a sensor surface with different sensitivity behaviours according to what needs to be measured. The sensitivity for force applied to the hand grip may be tuned e.g. in that it is higher at first, during compression of a softer additional layer, and then lower afterwards, during compression of the outer layer.

In some embodiments at least one layer with non-magnetized magnetic particles is provided as shielding layer. Shielding layers may increase the robustness of the measurements. The at least one shielding layer may have a different hardness than the first layer of elastomeric material and/or the second layer of elastomeric material without magnetic particles. Good shielding may be achieved with alternating non-magnetic and magnetic non-magnetized layers in a layered construct. Ideally, the non-magnetic is thicker than the non-magnetized layer and the non-magnetized is the outermost layer so that field lines prefer to loop through it instead of penetrating through the non-magnetic layer.

The hardness or softness of all the layers can be adjusted to correspond to expected grip forces and desired resolution or range of the measurements.

In some embodiments the array of magnetic sensor elements may be arranged on a flexible printed circuit board (PCB). A flexible PCB allows adjustment to a complex 3D geometry of the hand grip. *The amount of* magnetic sensor elements and their distribution depends on the application and the need for spatial coverage.

In some embodiments the first layer of elastomeric material may have different regions with different magnetization orientations, material hardness or base magnetic field intensity (i.e. when no gripping force is applied). Thereby sensitivity in different regions of interest may be adjusted.

In some embodiments an outer surface of the hand grip may be provided with at least one protrusion, rib or bump to tune the sensitivity of the measurement in different regions of interest or serve as guidance for a user. The guidance may e.g. be used for correct positioning of the fingers of a user.

In some embodiments the magnetic sensor element may comprise a Hall-sensor, preferably a 3D Hall-sensor, or at least one planar inductor coil, preferably several planar inductor coils arranged in a plane.

The intensity of the remanent magnetic field and the magnitude of change depends on the type of magnetic particles used, the filling grade of the magnetic particles and the geometry of the elastomeric component or the section of the elastomeric component comprising the magnetic particles.

In some embodiments the matrix of elastomer material of the elastomeric component may be a thermoset elastomer or a thermoplastic elastomer (TPE). The elastomeric material can be, for example, a synthetic or natural rubber, such as butyl rubber, isoprene rubber, butadiene rubber, halogenated butyl rubber (e.g., bromobutyl rubber), ethylene propylene terpolymer, silicone rubber, fluoro- or perfluoroelastomers, chlorosulfonate, polybutadiene, butyl, neoprene, 30 nitrile, polyisoprene, buna-N, copolymer rubbers such as ethylene-propylene (EPR), ethylene-propylene-diene monomer (EPDM), acrylonitrile-butadiene (NBR or HNBR) and styrene-butadiene (SBR), blends such as ethylene or propylene-EPDM, EPR, or NBR, combinations thereof. The term "synthetic rubbers" also should be understood to encompass materials which alternatively may be classified broadly as thermoplastic or thermosetting elastomers such as polyurethanes, silicones, fluorosilicones, styrene- isoprene-styrene (SIS), and styrene-butadiene-styrene (SBS), as well as other polymers which exhibit rubber-like properties such as plasticized nylons, polyolefins, polyesters, ethylene vinyl acetates, fluoropolymers, and polyvinyl chloride. Good results may be achieved with ethylene propylene diene mono rubber (EPDM), silicone rubber (SR), liquid silicone rubber (LSR), butyl rubber, isoprene or nitrile rubber. The elastomeric material can be chosen to achieve specific strain-stress curves or provide additional properties such as the ability to respond to humidity or temperature changes.

In some embodiments the magnetic particles may be based on magnetic material with high remanence allowing permanent magnetization and may comprise rare earth materials such as neodymium (Nd), niobium (Nb) or samarium (Sm), or more common materials such as boron (B), iron (Fe), cobalt (Co), nickel (Ni) or silicon (Si), or hard ferrites such as strontium ferrite or barium ferrite, or iron-based alloys with high degree of remanence, or mixtures of any of these. The mixture of the materials can be chosen to obtain the desired range of remanence, coercivity, temperature resilience and/or chemical resilience.

In some embodiments the magnetic particles may have an average particle size, which blend homogeneously with the matrix without disturbing the desired mechanical properties. Good results have been achieved with an average particle size below 5 microns.

In some embodiments the magnetic particles can be isotropic or anisotropic and accordingly may be dispersed in an isotropic or an anisotropic way.

The features of the hand-operated device with a hand grip may also be part of the above-described method.

### Brief Explanation of the Figures

The invention is described in greater detail below with reference to embodiments that are illustrated in the figures. The figures show:
- Fig. 1: a hand-operated device with a hand grip;
- Fig. 2: a schematic representation of the layers of a first variant of a hand grip,
- Fig. 3: a schematic representation of the layers of a second variant of a hand grip;
- Fig. 4: force distribution measurements.

### Embodiments of the Invention

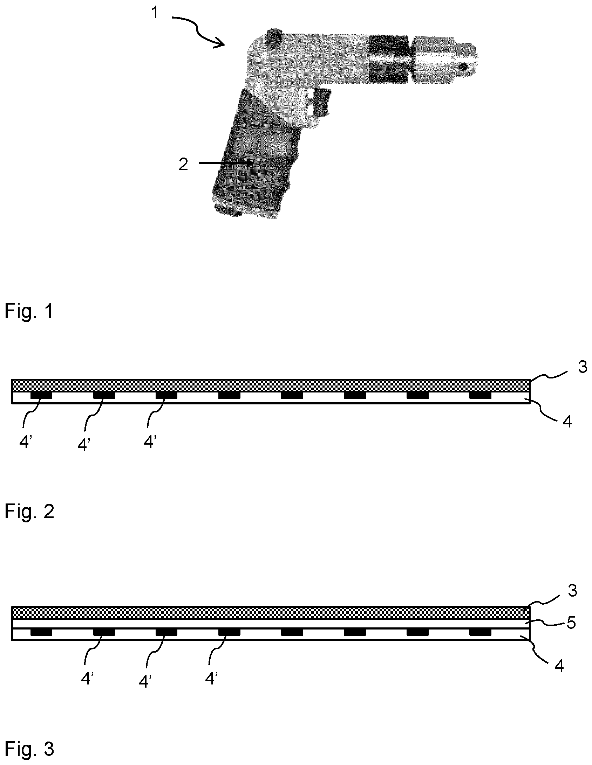

Fig. 1 shows a hand-operated device 1 (here a hand-held drill) with an ergonomic elastomer hand grip 2.

Fig. 2 shows a schematic representation of different layers of the hand grip 2. An first layer 3 (top layer) is made of elastomeric material with homogeneously dispersed and permanently magnetized magnetic particles. The permanently magnetized particles create a remanent magnetic field. A layer 4, preferably a flexible printed circuit board/foil, with an array of magnetic sensor elements 4' for measuring the remanent magnetic field is arranged underneath the first layer 3 of elastomeric material. The magnetic sensor elements 4' are distributed over different locations of first layer 4 and the hand grip.

Fig. 3 shows a schematic representation of different layers of the hand grip 2. In addition to the variant of Fig. 2, an additional layer 5 of elastomeric material without magnetic particles is arranged between the array of magnetic sensor elements 4 and the first layer 3 of elastomeric material, wherein the second layer 5 of elastomeric material without magnetic particles has a different hardness than the first layer 3 of elastomeric material.

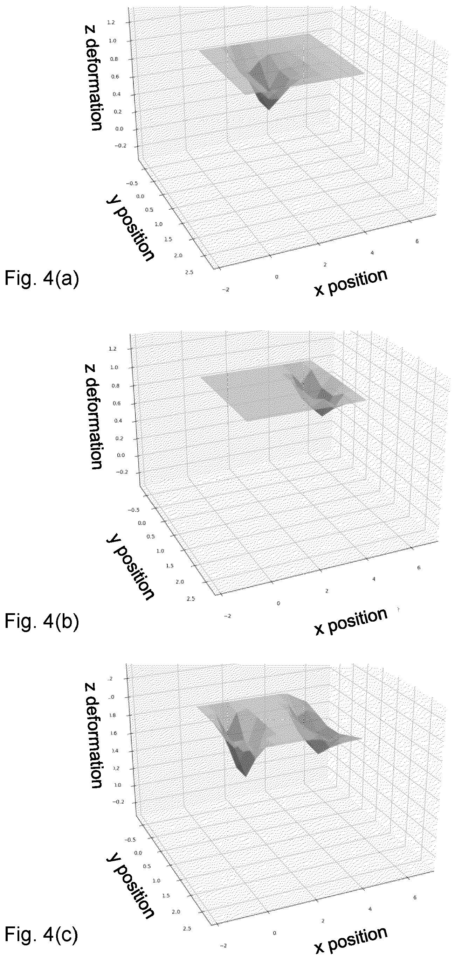

Fig. 4 shows an example of a force distribution measurement along x- and y-position using a layer of elastomeric material with homogeneously dispersed magnetic particles and an 6x3 array of magnetic sensor elements. The z-axis shows the deformation of the elastomeric layer calculated from a local change in the remanent magnetic field. Fig. 4(a) shows a force distribution when pressing a finger on left side of the elastomeric layer. Fig. 4(b) shows a force distribution when pressing a finger on right side of the elastomeric layer. Fig. 4(c) shows a force distribution when pressing two fingers onto the elastomeric layer.

### Reference Signs

- 1: hand-operated device
- 2: hand grip
- 3: first layer with magnetized particles
- 4: array of magnetic sensor elements
- 4': magnetic sensor element
- 5: second layer without magnetized particles

## Claims

1. Method for monitoring grip strength of and user interactions with a hand-operated device with a hand grip,
wherein the hand grip comprises:
a first layer of elastomeric material with homogeneously dispersed magnetic particles, and
an array of magnetic sensor elements arranged for measuring the magnetic properties in the elastomeric material at different locations of the hand grip;
wherein the method comprises the steps of
a. controlling the array of magnetic sensor elements to measure the magnetic properties of the first layer at different locations of the hand grip,
b. calculating a distribution of gripping force over the different locations of the hand grip based on the measured magnetic properties.

2. Method according to claim 1, wherein the dispersed magnetic particles are permanently magnetized to create a remanent magnetic field in the elastomeric component and the sensor element measures the remanent magnetic field of the elastomeric component.

3. Method according to claim 1, wherein the magnetic sensor element creates a magnetic field and measures the interactions of the magnetic particles with the generated magnetic field.

4. Method according to one of the preceding claims, wherein the array of magnetic sensor elements is arranged underneath or around the first layer of elastomeric material.

5. Method according to one of the preceding claims, wherein an operating condition of the hand-operated device is controlled based on the calculated force distribution.

6. Method according to one of the preceding claims, wherein the calculated force distribution is compared to at least one predefined force distribution pattern.

7. Method according to one of the preceding claims, wherein the calculated force distribution is monitored and stored over a predefined time.

8. Hand-operated device with a hand grip, wherein the hand grip comprises
a first layer of elastomeric material with homogeneously dispersed magnetic particles, and
an array of magnetic sensor elements arranged for measuring magnetic properties of the first layer at different locations of the hand grip;
wherein the hand-operated device comprises a processing unit configured to
control the array of magnetic sensor elements to measure the magnetic properties of the first layer at different locations of the hand grip, and
calculate a distribution of gripping force over the different locations of the hand grip based on the measured magnetic properties.

9. Hand-operated device according to claim 8, wherein a second layer of elastomeric material without magnetic particles is arranged between the array of magnetic sensor elements and the first layer of elastomeric material, wherein the second layer of elastomeric material preferably has a different hardness than the first layer of elastomeric material.

10. Hand-operated device according to one of the claims 8 to 9, wherein at least one layer provided with non-magnetized magnetic particles is provided as shielding layer.

11. Hand-operated device according to claim 10, wherein the shielding layer has a different hardness than the first layer of elastomeric material and/or the second layer of elastomeric material.

12. Hand-operated device according to one of the claims 8 to 11, wherein the array of magnetic sensor elements is arranged on a flexible printed circuit board.

13. Hand-operated device according to one of the claims 8 to 12, wherein the first layer of elastomeric material has different regions with different magnetization orientations, material hardness or magnetic field intensity.

14. Hand-operated device according to one of claims 5 to 13, wherein the hand grip is provided with at least one protrusion, rib or bump to tune the sensitivity of the measurement in different regions of interest or serve as guidance for a user.
